# EUROPÄISCHE PATENTSCHRIFT

(11) **EP 3 020 603 B1**
(45) Veröffentlichungstag und Bekanntmachung des Hinweises auf die Patenterteilung: **29.04.2020**
(21) Anmeldenummer: 14811347.5
(22) Anmeldetag: 10.06.2014
(51) Int. Cl.: B60Q 1/44, B60Q 1/46

(54) **SYSTEM FÜR DIE VERMEIDUNG VON AUFFAHRUNFÄLLEN**
SYSTEM FOR PREVENTING ACCIDENTS CAUSED BY REAR COLLISIONS
SYSTÈME POUR LA PRÉVENTION D'ACCIDENTS PAR COLLISION ARRIÈRE

(30) Priorität: 10.06.2013 ES 201300843
(43) Veröffentlichungstag der Anmeldung: 18.05.2016
(60) Teilanmeldung: 20164771.6
(73) Patentinhaber: Pino Méndez, Juán José, 36860 Ponteareas (Pontevedra ) (ES)
(72) Erfinder: Pino Méndez, Juán José, 36860 Ponteareas (Pontevedra ) (ES)
(74) Vertreter: Stiebe, Lars Magnus
(86) Internationale Anmeldenummer: PCT/ES2014/000093
(87) Internationale Veröffentlichungsnummer: WO 2014/198971

(56) Entgegenhaltungen:
- EP-A2- 0 219 858
- EP-A2- 1 060 950
- DE-A1- 2 339 841
- DE-A1- 2 544 695
- DE-U1-202007 009 587
- US-A- 2 824 921
- US-A- 2 832 863
- US-A- 3 171 914
- US-A1- 2002 133 282
- US-A1- 2002 133 282
- US-A1- 2010 332 101

## Beschreibung

### GEBIET DER ERFINDUNG

Die vorliegende Erfindung betrifft ein System, das nachfolgende Fahrzeuge durch ein Blinken des dritten Bremslichts davor warnt, dass eine Gefahr von Auffahrunfällen besteht, indem zeitweise besagtes Signal anhand von drei Annahmen abgegeben wird: Erstens, wenn das vorausfahrende Fahrzeug sich anschickt zu bremsen, zweitens, wenn das vorausfahrende Fahrzeug seine Geschwindigkeit stark vermindert und drittens, wenn der Verkehr mit ungewöhnlich langsamer Geschwindigkeit fließt.

Diese Erfindung löst das Problem der Auffahrunfälle, die auf Straßen und Autobahnen durch starkes Bremsen, durch verminderte Geschwindigkeit oder einfach durch Bremsen erzeugt werden.

Das erfindungsgemäße System bietet erhebliche Vorteile gegenüber bekannten Bremssignal-Einrichtungen, deren wichtigste die Einfachheit der Konstruktion und Ausnutzung elektrischer und elektronischer Fahrzeugkomponenten sind.

Ein weiterer wichtiger Vorteil ist die Verwendung des GPS-Systems, um die Art der Straße zu erkennen, auf der das Fahrzeug fährt, um im Falle einer ungewöhnlich langsamen Fahrt auf Autobahnen und Schnellstraßen, das Steuergerät anzuleiten das Lichtsignal der dritten Bremsleuchte zu aktivieren.

### HINTERGRUND DER ERFINDUNG

Es ist derzeit ein System bekannt, mit dem einige Fahrzeuge ausgestattet sind, durch das die Notbeleuchtung eingeschaltet wird, wenn bei einem plötzlichem Bremsvorgang das ABS-System in Betrieb tritt. Des Weiteren ist die Installation von High-Brightness-LEDs in den Bremsleuchten bekannt, vor allem in der dritten Bremsleuchte, die sich innerhalb eines Bruchteils einer Sekunde vor einer herkömmlichen Glühbirne einschalten.

Obwohl keine mit der in dieser Beschreibung der vorliegenden Erfindung identische Erfindung aufgefunden wurde, werden im Folgenden die aufgefundenen Dokumente beschrieben, die den mit der Erfindung zusammenhängenden Stand der Technik darstellen.

So betrifft Dokument ES 2 051 336 T3 eine Fahrzeugverzögerungs-Warneinrichtung, die eine piezoelektrische Sensoreinrichtung umfasst, die mit dem Gaspedal oder der Bodenplatte zur Ausgabe eines ersten Signals verbunden ist, wenn sie einer entsprechenden Belastung unterworfen wird; Kontakteinrichtungen, die untereinander oder mit dem Gaspedal bzw. der Bodenplatte zur Kontaktierung mit den piezoelektrischen Sensor nach Loslassen des Gaspedals verbunden sind, um zu Veranlassen, dass die Sensoreinrichtung ein erstes Signal in Reaktion auf die Veränderung der Belastung ausgibt, die durch die Kontakteinrichtung auf die piezoelektrische Sensoreinrichtung ausgeübt wird; und mit den Bremsleuchten und der piezoelektrischen Sensoreinrichtung verbundene Schalteinrichtung zum Analysieren des von der piezoelektrischen Sensoreinrichtung erzeugten ersten Signals und zur Betätigung der Bremsleuchten in Abhängigkeit von der Analyse, wenn das erste Signal über einem vorbestimmten Schwellenwert liegt. Obwohl das Problem der Verlangsamung des vorausfahrenden Fahrzeugs gelöst wird, geschieht das auf von der vorgeschlagenen Erfindung sehr unterschiedliche Weise.

Dokument ES 2 138 898 A1 beschreibt ein automatisches System zur Vermeidung von Unfällen in jedem Fahrzeugtyp, das ein Schaltungssystem umfasst, das mit dem elektrischen Kreis des Fahrzeugs verbunden ist, umfassend: mindestens einen integrierten Schaltkreis mit einer Einrichtung zum Erfassen des Sicherheitsabstandes oder der Entfernung zwischen einem Fahrzeug und einem anderen vorausfahrenden Fahrzeug und/oder einem vorausliegenden Hindernis, dessen Abstand der Entfernung in Beziehung mit der Geschwindigkeit des Fahrzeugs steht, wobei automatisch Befehle ausgelöst werden, um das Fahrzeug zu verlangsamen und/oder zu stoppen, um eine Kollision zu vermeiden, sowie Einrichtungen zum zeitweise Abschaltung der Antriebsmittel. Selbst mit seinem Automatismus wird sicher nicht das Problem mit der Sicherheit und Einfachheit wie mit der vorgeschlagenen Erfindung gelöst.

ES 1 066 558 U soll die Aufgabe mittels eines Aufzeichnungsgeräts, das Bilder von einer Vielzahl von im Fahrzeug befindlicher Kameras aufzeichnet, einen Datenmikroprozessor und einem Warnsignal an den Fahrer des Fahrzeugs lösen, indem die Kameras das Vorhandensein und die Position eines Hindernisses vor oder hinter dem Fahrzeug erfassen und die Daten der Anwesenheit und der Position des Hindernisses an den Mikroprozessor senden, der mittels der von der Kamera erhaltenen Daten die Position die Relativgeschwindigkeit des Hindernisses gegenüber dem Fahrzeug berechnet, und ein Warnsignal an den Fahrer nach vorgegebenen Werten der Position und der relativen Annäherungsgeschwindigkeit zwischen dem Hindernis und dem Fahrzeug abgibt und weiterhin Schutzeinrichtungen nach anderen vorgegebenen Werten der Position und der relativen Annäherungsgeschwindigkeit zwischen dem Hindernis und dem Fahrzeug aktiviert. Die Lösung ist sehr verschiedenen zu der durch die vorliegende Erfindung vorgeschlagen.

EP1060950 A2, DE2339841 A1, US2010332101 A1 offenbaren weitere Systeme für die Vermeidung von Auffahrunfällen.

### BESCHREIBUNG DER ERFINDUNG

Das erfindungsmäße System für die Vermeidung von Auffahrunfällen umfasst eine elektronische Steuereinheit, die mit einem elektronischen Schaltkreis eines Fahrzeugs verbindbar ist, und einen Signalempfänger und einen Signalgeber und eine dritte Bremsleuchte mit LEDs und so programmiert ist, dass in Verbindung mit einer GPS-Antenne (4), einem Gaspedalencoder (7) und der dritten Bremsleuchte (5) folgende Funktionen ausgeführt werden:
- Wenn das Fahrzeug auf einer Autobahn oder einer Schnellstraße mit einer geringeren Geschwindigkeit als die minimal zulässige Geschwindigkeit fährt, empfängt die Steuereinheit ein Signal vom GPS, das an den Signalgeber weitergeleitet wird und die LEDs der dritten Bremsleuchte aktiviert, so dass diese blinkt.
- Wenn vor dem Treten eines Bremspedals erkennt der Gaspedalencoder, dass der Fahrer des Fahrzeugs den Fuß abrupt (x Impulse pro Sekunde) von dem Gaspedal zurückgezogen hat und sendet ein Signal an die Steuereinheit, so dass diese wiederum ein Signal an die dritte Bremsleuchte sendet, so dass diese blinkt.

Wenn eine plötzliche Verringerung der Fahrzeuggeschwindigkeit selbst ohne Berührung bzw. Betätigung des Bremspedals eintritt, empfängt die Steuereinheit ein Signal vom elektronischen Schaltkreis eines Multiplexing Fahrzeugs oder eines ABS-Computers im Falle von nicht vorhandenem Multiplexing und signalisiert dem Sender ein Signal an die dritte Bremsleuchte (5) zu senden, so dass diese blinkt.

### KURZE BESCHREIBUNG DER ZEICHNUNGEN

In Folgenden wird auf eine Figur Bezug genommen, die es ermöglicht, die Beschreibung besser zu verstehen und eine besondere, nicht einschränkende Ausführungsform des Gegenstandes der vorliegenden Erfindung zeigt.

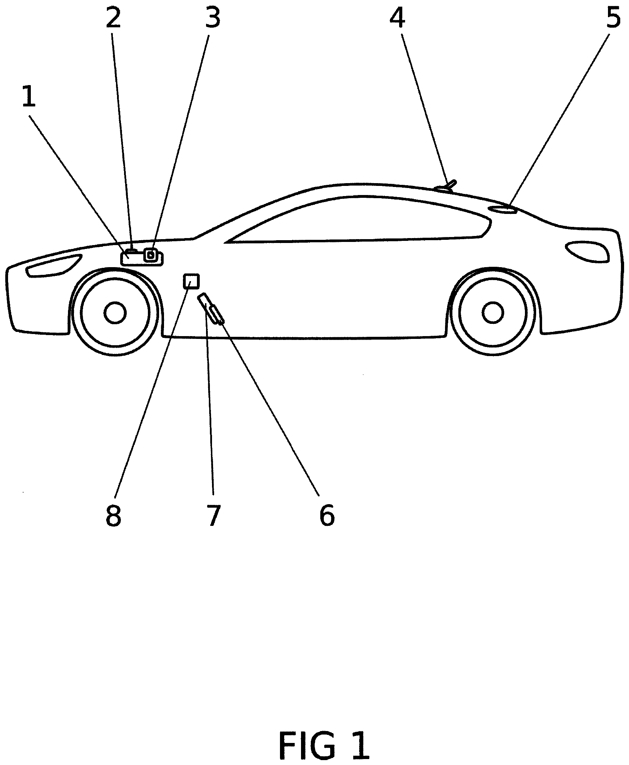

Figur 1: Schematische Darstellung des Fahrzeugs und der Bezugspunkte. In dieser Figur bezeichnen die folgenden Bezugszeichen:
- 1.: Steuereinheit
- 2.: Signalempfänger
- 3.: Signalgeber
- 4.: GPS-Antenne
- 5.: Dritte Bremsleuchte
- 6.: Bremspedal
- 7.: Gaspedalencoder
- 8.: Gaspedal

### BESCHREIBUNG EINER BEVORZUGTEN AUSFÜHRUNGSFORM

Im Folgenden wird eine bevorzugte Ausführungsform der Erfindung, die nur eine von einer Vielzahl von Bauweisen ist, die sich für die industrielle Verwirklichung eignet, sowie ein oben beschriebener Aufbau beschrieben.

Eine bevorzugte Ausführungsform des erfindungsgemäßen Systems für die Vermeidung von Auffahrunfällen umfasst eine elektronische Steuereinheit (1), die mit einem elektronischen Schaltkreis eines Fahrzeugs verbindbar ist, und einen Empfänger (2) und einen Signalgeber (3) und eine dritte Bremsleuchte mit LEDs, und so programmiert ist, dass in Zusammenarbeit mit der GPS-Antenne (4) Antenne, dem Gaspedalencoder (7) und der dritten Bremsleuchte (5) folgende Funktionen ausgeführt werden:
- Wenn das Fahrzeug auf einer Autobahn oder einer Schnellstraße mit einer geringeren Geschwindigkeit als die minimal zulässige Geschwindigkeit fährt, empfängt die Steuereinheit ein Signal von der GPS-Antenne (4), das an den Signalgeber (3) weitergeleitet wird und die LEDs der dritten Bremsleuchte (5) aktiviert, so dass diese blinkt.
- Wenn vor dem Treten eines Bremspedals (6) erkennt der Gaspedalencoder (7), dass der Fahrer des Fahrzeugs den Fuß abrupt (x Impulse pro Sekunde) von dem Gaspedal (8) zurückgezogen hat und sendet ein Signal an die Steuereinheit (1), so dass diese wiederum ein Signal an die dritte Bremsleuchte (5) sendet, so dass diese blinkt.
- Wenn eine plötzliche Verringerung der Fahrzeuggeschwindigkeit selbst ohne Berührung bzw. Betätigung des Bremspedals (6) eintritt, empfängt die Steuereinheit (1) ein Signal vom elektronischen Schaltkreis des Fahrzeugs (Multiplexing Fahrzeug) oder eines ABS-Computers (im Falle von nicht vorhandenem Multiplexing) und signalisiert dem Signalgeber (7) ein Signal an die dritte Bremsleuchte (5) zu senden, so dass diese blinkt.

## Patentansprüche

1. System für die Vermeidung von Auffahrunfällen, das eine Steuereinheit (1) die mit einem elektronischen Schaltkreis eines Fahrzeugs verbindbar ist und einen Signalempfänger (2) und einen Signalgeber (3) und eine dritte Bremsleuchte mit LEDs umfasst, **dadurch gekennzeichnet, dass** in Zusammenarbeit mit einer GPS-Antenne (4), einem Gaspedalencoder (7) und der dritten Bremsleuchte (5) die folgenden Funktionen ausgeführt werden:
- Wenn das Fahrzeug auf einer Autobahn oder einer Schnellstraße mit einer geringeren Geschwindigkeit als die minimal zulässige Geschwindigkeit fährt, empfängt die Steuereinheit ein Signal von der GPS-Antenne (4), das an den Signalgeber (3) weitergeleitet wird und die LEDs der dritten Bremsleuchte (5) aktiviert, so dass diese blinkt.
- Wenn vor dem Treten eines Bremspedals (6) erkennt der Gaspedalencoder (7), dass der Fahrer des Fahrzeugs den Fuß abrupt von dem Gaspedal (8) zurückgezogen hat und sendet ein Signal an die Steuereinheit (1), so dass diese wiederum ein Signal an die dritte Bremsleuchte (5) sendet, so dass diese blinkt.
- Wenn eine plötzliche Verringerung der Fahrzeuggeschwindigkeit selbst ohne Berührung bzw. Betätigung des Bremspedals (6) eintritt, empfängt die Steuereinheit (1) ein Signal vom elektronischen Schaltkreis eines Multiplexing Fahrzeugs oder eines ABS-Computers im Falle von nicht vorhandenem Multiplexing und signalisiert dem Signalgeber (3) ein Signal an die dritte Bremsleuchte (5) zu senden, so dass diese blinkt.

## Claims

1. A system for avoiding rear-end collisions, which comprises a third brake light having LEDs and a control unit (1) which is connectable to an electronic switching circuit of the vehicle and is provided with a signal receiver (2) and a signal transmitter (3), **characterized in that**, in cooperation with a GPS antenna (4), an accelerator pedal encoder (7) and the third brake light (5), the following functions are carried out:
- when the vehicle is driving on a freeway or an expressway at a lower speed than the minimum permissible speed, the control unit (1) receives a signal from the GPS antenna (4), which the control unit sends to the transmitter (3), and the transmitter activates the LEDs of the third brake light (5), so that it flashes;
- when the accelerator pedal encoder (7) recognizes, before stepping on a brake pedal (6), that the driver of the vehicle has abruptly withdrawn the foot from the accelerator pedal (8), it sends a signal to the control unit (1), so that the control unit in turn sends a signal to the third brake light (5), so that it flashes;
- when there is a sudden decrease in the vehicle speed even without stepping on the brake (6) or even when stepping on it, the control unit (1) receives this signal of the sudden decrease from the electronic switching circuit of a multiplexing vehicle or from a ABS computer in the event of a non-existing multiplexing and sends a signal to the transmitter (3), so that the transmitter in turn sends a signal to the third brake light (5), so that it flashes.

## Revendications

1. Système pour éviter des collisions, qui comprend un troisième feu de stop avec des DEL et une unité de commande (1), qui peut être reliée à un circuit de commutation électronique du véhicule et est équipée d'un récepteur de signaux (2) et d'un émetteur de signaux (3), **caractérisé en ce qu'**en collaboration avec une antenne GPS (4), un codeur de pédale d'accélérateur (7) et le troisième feu de stop (5), les fonctions suivantes sont exécutées :
- quand le véhicule circule sur une autoroute ou une voie rapide à une vitesse inférieure à la vitesse minimale autorisée, l'unité de commande (1) reçoit un signal de l'antenne GPS (4) que l'unité de commande envoie à l'émetteur (3), et celui-ci active les DEL du troisième feu de stop (5) de sorte que celui-ci clignote ;
- quand le codeur de pédale d'accélérateur (7) identifie avant d'enfoncer la pédale de frein (6) que le conducteur du véhicule a retiré le pied brutalement de la pédale d'accélérateur (8), il envoie un signal à l'unité de commande (1) de sorte que celle-ci envoie à nouveau un signal au troisième feu de stop (5) si bien que celui-ci clignote ;
- quand une diminution brutale de la vitesse de véhicule sans même enfoncer le frein (6) ou même lors de l'enfoncement de celui-ci, l'unité de commande (1) reçoit ledit signal de la diminution brutale du circuit de commutation électronique d'un véhicule à multiplexage ou d'un calculateur ABS dans le cas d'un multiplexage non disponible et envoie à l'émetteur (3) un signal de sorte que celui-ci envoie à nouveau un signal au troisième feu de stop (5) de sorte que celui-ci clignote.
